# FASCICULE DE BREVET EUROPEEN

(11) **EP 3 377 428 B1**
(45) Date de publication et mention de la délivrance du brevet: **08.07.2020**
(21) Numéro de dépôt: 16794680.5
(22) Date de dépôt: 23.09.2016
(51) Int. Cl.: B65G 47/88

(54) **DISPOSITIF DE BUTÉE**
WIDERLAGERVORRICHTUNG
ABUTMENT DEVICE

(30) Priorité: 25.09.2015 FR 1559056
(43) Date de publication de la demande: 26.09.2018
(73) Titulaire: Elcom, 38300 Bourgoin-Jallieu (FR)
(72) Inventeur: VERGNE, Eric, 69260 Charbonnières-les-Bains (FR)
(74) Mandataire: Delorme, Nicolas
(86) Numéro de dépôt international: PCT/FR2016/052409
(87) Numéro de publication internationale: WO 2017/051128

(56) Documents cités:
- US-A- 3 155 222
- US-A1- 2007 175 729

## Description

La présente invention se rapporte à un dispositif de butée.

Dans le domaine des convoyeurs, il est connu d'utiliser des butées mobiles qui permettent de réguler le déplacement d'un objet.

Ainsi, dans le cas, par exemple, de convoyeurs de chaines automatiques, il est connu d'utiliser des butées mobiles pour piloter l'arrêt d'un objet à différents postes, ou pour orienter l'objet à travers différentes ramifications de la chaine.

D'une manière générale, les butées mobiles sont commandées par un circuit pneumatique.

Ainsi, il est nécessaire, pour utiliser ce type de butées, d'installer un circuit pneumatique. Or, l'installation et la gestion d'un circuit pneumatique sont couteuses et présentent des risques de fuites et de pertes de pression. De plus, ces butées peuvent rarement résister à des efforts mécaniques élevés. On connait également par le document US 2007/175769, une butée électrique qui comprend un bras d'arrêt et un bras d'arrêt qui est entrainé par un moteur électrique. Le document US 3155222 divulgue un dispositif de butée selon le préambule de la revendication 1.

En conséquence, la présente invention a pour objectif de fournir un dispositif de butée mobile simple, qui puisse résister à des efforts mécaniques importants en consommant peu d'énergie.

Selon une définition générale, l'invention concerne un dispositif de butée qui présente un châssis comprenant :
(i) un organe de butée mobile en rotation entre une position de butée et une position rétractée,
(ii) un levier mobile en rotation entre une position de maintien de l'organe de butée et une position de libération de l'organe de butée permettant à l'organe de butée de passer en position rétractée, et
(iii) une came de commande entrainée en rotation par un moteur électrique, la came de commande étant configurée pour faire passer le levier de la position de maintien à la position de libération.

Le levier comprend une portion de maintien configurée pour coopérer avec une surface d'appui de l'organe de butée, de sorte qu'en position de maintien la portion de maintien du levier est engagée contre la surface d'appui de l'organe de butée à l'extérieur du plan défini par les axes de rotation du levier et de l'organe de butée, et en position de libération la portion de maintien est écartée de l'organe de butée, le levier comprenant, de plus, un organe poussoir configuré pour exercer un effort sur le châssis pour maintenir le levier en position de maintien de l'organe de butée.

Ainsi, l'invention propose un dispositif de butée mobile de structure simple, qui peut résister à des efforts mécaniques importants en consommant peu d'énergie.

En effet, en position de maintien, le dispositif de butée présente une articulation autobloquante qui garantit le blocage en position de butée de l'organe de butée. Le dispositif selon l'invention peut donc résister à d'importants efforts mécaniques, sans consommer d'énergie pour maintenir l'organe de butée en position. Ainsi, le dispositif selon l'invention utilise de l'énergie électrique uniquement pour faire passer l'organe de butée en position rétractée.

Selon une disposition particulière, organe poussoir comprend un doigt sollicité par un ressort de compression.

Le levier peut comprendre une portion suiveuse configurée pour coopérer avec la came de commande pour faire passer le levier en position de libération.

L'organe de butée peut présenter un bec configuré pour que lorsque le levier est en position de libération, l'organe de butée passe en position rétractée.

Le levier peut présenter un évidement configuré pour recevoir le bec lorsque l'organe de butée est en position rétractée.

D'autres caractéristiques et avantages de l'invention se dégageront de la description qui va suivre, en regard des dessins ci-annexés, qui représentent à titre d'exemple non limitatif, un mode de réalisation de l'invention.
- La figure 1 est une vue en perspective, en coupe, d'un dispositif selon l'invention ;
- La figure 2 est une vue de face, en coupe, d'un dispositif selon l'invention lorsque l'organe de butée mobile est en position de butée ;
- La figure 3 est une vue de face, en coupe, d'un dispositif selon l'invention lorsque l'organe de butée mobile est en position rétractée.

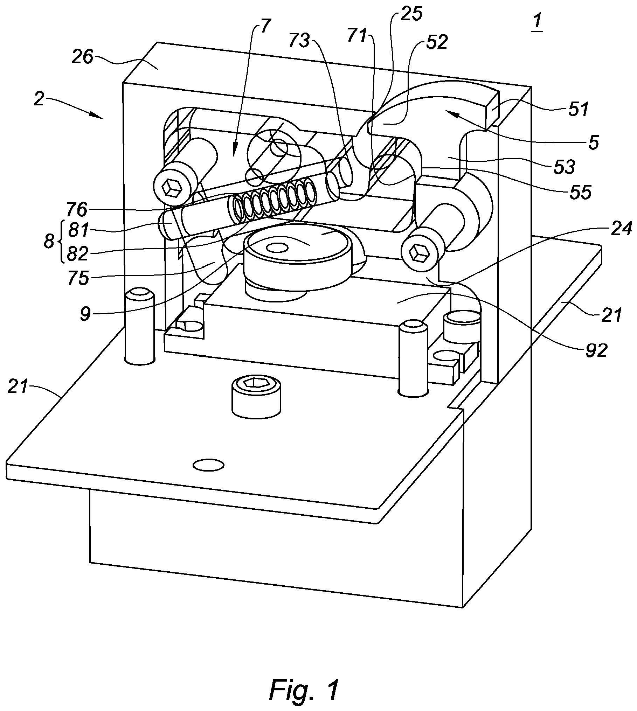

L'invention propose un dispositif de butée 1 représenté sur les figures 1 à 3. Le dispositif de butée 1 présente un châssis 2. Selon le mode de réalisation ici présenté, le châssis 2 présente une géométrie parallélépipédique. Le châssis 2 présente deux ailettes 21 permettant de fixer le châssis 2, par exemple, à un convoyeur. De plus le châssis 2 présente une chambre 24. La chambre 24 comprend une lumière 25 débouchant sur une surface supérieure 26 du châssis 2.

Un organe de butée 5, un levier 7 et une came de commande 9 sont positionnés dans la chambre 24.

L'organe de butée 5 présente une forme générale de marteau avec : une surface de butée 51, un bec 52 et un bras 53.

Le bras 53 de l'organe de butée 5 est lié en pivot au châssis 2, de sorte que l'organe de butée 5 est mobile entre une position de butée et une position rétractée. En position de butée, La surface de butée 51 émerge de la lumière 25 de la chambre 24. En position rétractée, l'organe de butée 5 est entièrement contenu dans la chambre 24.

L'organe de butée 5 présente une surface d'appui 55 ménagée, le long du bras 53, en regard du bec 52. Selon le monde de réalisation ici présenté, la surface d'appui 55 comprend un congé entre le bras 53 et le bec 52.

De plus, le bec 52 présente une géométrie adaptée pour faire passer l'organe de butée 5 en position rétractée, lorsque aucun effort n'est appliqué sur l'organe de butée 5.

Le levier 7 présente une géométrie coudée avec deux extrémités.

Une première extrémité du levier 7 présente une portion de maintien 71 adaptée pour glisser et appuyer sur la surface d'appui 55.

A proximité de la portion de maintien 71, le levier 7 présente un évidement 73 configuré pour recevoir le bec 52 de l'organe de butée 5 lorsque l'organe de butée 2 est en position rétractée.

Une deuxième extrémité du levier 7 présente une portion suiveuse 75 configurée pour coopérer avec la came de commande 9.

A proximité de la portion suiveuse 75, le levier 7 présente un trou borgne 76.

La portion coudée du levier 7 est liée en pivot au châssis 2, de sorte de le levier 7 est mobile entre une position de maintien et une position de libération.

Un organe poussoir 8 est positionné dans le trou borgne 76. L'organe poussoir 8 comprend un doigt 81 sollicité par un ressort de compression 82 dont la fonction sera détaillée ci-après.

La came de commande 9 est positionnée en regard de la portion suiveuse 75, de manière à pouvoir exercer un effort sur la portion suiveuse 75.

La came de commande 9 est pilotée par un moteur électrique 92 relié au châssis 2. Selon le mode de réalisation ici présenté, le moteur électrique 92 est un servomoteur brushless.

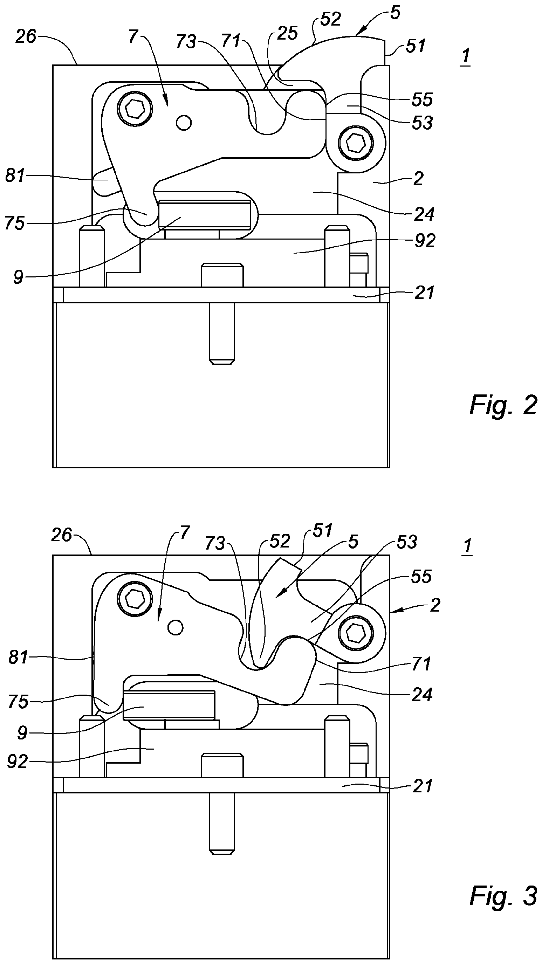

On peut se reporter aux figures 2 et 3 pour apprécier le fonctionnement du dispositif de butée 1.

La figure 2 présente le dispositif de butée 1 lorsque l'organe de butée 5 est en position de butée.

Comme on peut l'observer, dans cette configuration, le levier 7 est maintenu par le doigt 81, dans sa position de maintien. En position de maintien du levier 7, l'organe de butée 5 est maintenu en position de butée.

Le doigt 81 émerge partiellement du trou borgne 76 et appuie contre le châssis 2 pour que, la portion de maintien 71 exerce un effort sur la surface d'appui 55. L'effort exercé par la portion de maintien 71 permet de maintenir l'organe de butée 5 en position de butée.

D'une manière particulièrement avantageuse, en position de maintien, le point de contact de la portion de maintien 71 avec la surface d'appui 55 est au dessus de plan formé par l'axe de rotation du levier 7 et l'axe de rotation de l'organe de butée 5. Cette disposition technique permet de former une articulation dite à genouillère, garantissant ainsi le blocage du dispositif de butée 1 en position de butée. De plus, cette disposition technique permet à l'organe de butée, en position de butée, de résister à des efforts pouvant dépasser 100 DaN.

De plus, on peut observer qu'une région de la chambre 24 est une fin de course du levier 7 en position de maintien. Cette disposition permet aussi de garantir le blocage du dispositif de butée 1 en position de butée.

Comme on peut l'observer sur la figure 3, une rotation de la came de commande 9 permet de déplacer le levier 7 en position de libération.

En pivotant la came de commande 9 contraint et déplace la portion suiveuse 75, de sorte que l'organe poussoir 8 est maintenu rétracté dans le trou borgne 76, et la portion de maintien glisse sur la surface d'appui 55. Le passage en position de libération du levier 7 provoque le passage en position rétractée de l'organe de butée 5.

L'organe de butée 5 n'est alors plus maintenu dans sa position de butée de sorte qu'un objet - palette ou autre colis - circulant sur un convoyeur équipé du dispositif de butée selon l'invention 1 vient naturellement effacer le convoyeur pour le mettre dans sa position rétractée.

En position rétractée, le bec 52 se positionne dans l'évidemment 73 et l'organe de butée 5 passe en position rétractée.

Selon une disposition technique particulièrement avantageuse, le passage de la position rétractée à la position de butée est réalisé par un simple relâchement de l'effort exercé par la came 9 sur portion suiveuse 75. En effet, dès que la came 9 pivote et s'écarte de la portion suiveuse 75, l'effort de poussée du doigt 81, sur le châssis 2, suffit à faire passer le levier 7 en position de maintien et l'organe 5 en position de butée.

Ainsi l'invention propose un dispositif de butée commandé par énergie électrique peu énergivore. De plus, l'architecture du dispositif de butée 1 permet de garantir le blocage en position de butée, sans qu'il soit nécessaire de maintenir l'alimentation électrique de la came, ou d'utiliser un ressort particulièrement raide pour solliciter le doigt 81. Cette disposition permet ainsi d'utiliser un moteur électrique de puissance réduite tel que par exemple, un moteur électrique alimenté par une tension réglable située entre 4 et 6 V.

En outre, l'architecture du dispositif de butée 1 permet au dispositif de butée 1 de présenter des dimensions réduites qui autorisent, par exemple, son intégration entre deux brins de transfert distants de 40 millimètres.

## Revendications

1. Dispositif de butée (1) qui présente un châssis (2) comprenant :
(i) un organe de butée (5) mobile en rotation entre une position de butée et une position rétractée,
(ii) un levier (7) mobile en rotation entre une position de maintien de l'organe de butée (5) et une position de libération de l'organe de butée (5) permettant à l'organe de butée (5) de passer en position rétractée, et
(iii) une came de commande (9) entrainée en rotation par un moteur électrique, la came de commande (9) étant configurée pour faire passer le levier (7) de la position de maintien à la position de libération,
le levier (7) comprenant une portion de maintien (71) configurée pour coopérer avec une surface d'appui (55) de l'organe de butée (5), de sorte qu'en position de maintien la portion de maintien (71) du levier (7) est engagée contre la surface d'appui (55) de l'organe de butée (5) à l'extérieur du plan défini par les axes de rotation du levier (7) et de l'organe de butée (5), et en position de libération la portion de maintien (71) est écartée de l'organe de butée (5), **caractérisé en ce que** le levier (7) comprend, de plus, un organe poussoir (8) configuré pour exercer un effort sur le châssis pour maintenir le levier (7) en position de maintien de l'organe de butée (5).

2. Dispositif de butée (1) selon la revendication 1, **caractérisé en ce que** l'organe poussoir (8) comprend au moins un doigt (81) sollicité par un ressort (82).

3. Dispositif de butée (1) selon l'une des revendications 1 à 2, **caractérisé en ce que** le levier (7) comprend une portion suiveuse (75) configurée pour coopérer avec la came de commande (9) pour faire passer le levier (7) en position de libération.

4. Dispositif de butée (1) selon l'une des revendications 1 à 3, **caractérisée en ce que** l'organe de butée (5) présente un bec (52) configuré pour que lorsque le levier (7) est en position de libération, l'organe de butée (5) passe en position rétractée.

5. Dispositif de butée (1) selon la revendication 4, **caractérisée en ce que** le levier (7) présente un évidement (73) configuré pour recevoir le bec (52) lorsque l'organe de butée (5) est en position rétractée.

## Patentansprüche

1. Anschlagvorrichtung (1), die ein Gestell (2) aufweist, umfassend:
(i) ein Anschlagelement (5), das zwischen einer Anschlagposition und einer zurückgezogenen Position drehbar ist,
(ii) einen Hebel (7), der zwischen einer Position zum Halten des Anschlagelements (5) und einer Position zum Freigeben des Anschlagelements (5) drehbar ist, wodurch das Anschlagelement (5) in die zurückgezogene Position übergehen kann, und
(iii) einen Steuernocken (9), der von einem Elektromotor in Drehung versetzt wird, wobei der Steuernocken (9) so ausgestaltet ist, dass er den Hebel (7) von der Halteposition in die Freigabeposition übergehen lässt,
wobei der Hebel (7) einen Halteabschnitt (71) umfasst, der ausgestaltet ist, mit einer Auflagefläche (55) des Anschlagelements (5) zusammenzuwirken, sodass in der Halteposition der Halteabschnitt (71) des Hebels (7) gegen die Auflagefläche (55) des Anschlagelements (5) außerhalb der Ebene drückt, die von den Drehachsen des Hebels (7) und des Anschlagelements (5) definiert wird, und in der Freigabeposition der Halteabschnitt (71) von dem Anschlagelement (5) beabstandet ist, **dadurch gekennzeichnet, dass** der Hebel (7) des Weiteren ein Druckelement (8) umfasst, das ausgestaltet ist, eine Kraft auf das Gestell auszuüben, um den Hebel (7) in der Position zum Halten des Anschlagelements (5) zu halten.

2. Anschlagvorrichtung (1) nach Anspruch 1, **dadurch gekennzeichnet, dass** das Druckelement (8) mindestens einen Finger (81) umfasst, der durch eine Feder (82) beansprucht wird.

3. Anschlagvorrichtung (1) nach einem der Ansprüche 1 bis 2, **dadurch gekennzeichnet, dass** der Hebel (7) einen Nachlaufabschnitt (75) umfasst, der ausgestaltet ist, mit dem Steuernocken (9) zusammenzuwirken, um den Hebel (7) in die Freigabeposition übergehen zu lassen.

4. Anschlagvorrichtung (1) nach einem der Ansprüche 1 bis 3, **dadurch gekennzeichnet, dass** das Anschlagelement (5) eine Spitze (52) aufweist, die ausgestaltet ist, damit das Anschlagelement (5), wenn sich der Hebel (7) in der Freigabeposition befindet, in die zurückgezogene Position übergeht.

5. Anschlagvorrichtung (1) nach Anspruch 4, **dadurch gekennzeichnet, dass** der Hebel (7) eine Aussparung (73) aufweist, die ausgestaltet ist, die Spitze (52) aufzunehmen, wenn sich das Anschlagelement (5) in der zurückgezogenen Position befindet.

## Claims

1. A stop device (1) which has a frame (2) comprising:
(i) a stop member (5) movable in rotation between a stop position and a retracted position,
(ii) a lever (7) movable in rotation between a position for holding the stop member (5) and a position for releasing the stop member (5) allowing the stop member (5) to move into the retracted position, and
(iii) a control cam (9) driven in rotation by an electric motor, the control cam (9) being configured to move the lever (7) from the holding position to the release position,
the lever (7) comprising a holding portion (71) configured to cooperate with a bearing surface (55) of the stop member (5), so that in the holding position the holding portion (71) of the lever (7) is engaged against the bearing surface (55) of the stop member (5) outside the plane defined by the axes of rotation of the lever (7) and the stop member (5), and in the release position the holding portion (71) is spaced from the stop member (5), **characterized in that** the lever (7) further comprises a pusher member (8) configured to exert a force on the frame to hold the lever (7) in the position for holding the stop member (5).

2. The stop device (1) according to claim 1, **characterized in that** the pusher member (8) comprises at least one finger (81) biased by a spring (82).

3. The stop device (1) according to any of claims 1 to 2, **characterized in that** the lever (7) comprises a follower portion (75) configured to cooperate with the control cam (9) for moving the lever (7) into the release position.

4. The stop device (1) according to any of claims 1 to 3, **characterized in that** the stop member (5) has a slat (52) configured so that when the lever (7) is in the release position, the stop member (5) moves into the retracted position.

5. The stop device (1) according to claim 4, **characterized in that** the lever (7) has a recess (73) configured to receive the slat (52) when the stop member (5) is in the retracted position.
